# EUROPEAN PATENT APPLICATION

(11) **EP 2 527 986 A1**
(43) Date of publication of application: **28.11.2012**
(21) Application number: 10843866.4
(22) Date of filing: 21.01.2010
(51) Int. Cl.: G06F 12/00

(54) **INFORMATION PROCESSING APPARATUS, DRIVE CONTROL PROGRAM AND DRIVE CONTROL METHOD**

(71) Applicant: Fujitsu Limited, Kawasaki-shi, Kanagawa 211-8588 (JP)
(72) Inventor: KAZAMA, Tomoaki, Kawasaki-shi Kanagawa 211-8588 (JP)
(74) Representative: Stebbing, Timothy Charles
(86) International application number: PCT/JP2010/050700
(87) International publication number: WO 2011/089700

(57) **Abstract**

Troubles due to mismatch between physical and logical drives are prevented.

In an information processing apparatus (1) which associates logical drives with physical drives and performs processing using the physical drives, a control unit (1a) assigns logical drive identification information identifying a logical drive corresponding to a target drive to a physical drive (1c1) (target drive) that needs to be used in the processing. Then, the control unit (1a) performs the processing using the target drive based on the logical drive identification information.

## Description

### Technical Field

The embodiments discussed herein are related to an information processing apparatus, a drive control program, and a drive control method.

### Background Art

In recent years, because of a reduction in price on storage devices such as hard disk drives (HDD) and an increase in the amount of data used, information processing apparatuses such as personal computers are generally used which includes or is connected to a plurality of storage devices such as hard disk drives and use these storage devices.

There has been known a technique in which, in the case where a failure occurs in a part of a plurality of storage devices in such an information processing apparatus, the failure storage devices are disconnected, and then recovery data is written only on replacement devices (see, for example, PTL1).

### Citation List

PTL 1: Japanese Laid-open Patent Publication No. 7-121316

### Summary of Invention

### Technical Problem

In an information processing apparatus that uses a plurality of storage devices such as hard disk drives, the order of physical hard disk drives (physical drives) may not match the order of logical drives recognized by an OS (Operating System) or the like. In this case, the information processing apparatus may judge such mismatch between the physical and logical drives to be a match at the time of reinstalling an OS on a hard disk drive. This misjudgment may cause a trouble that the information processing apparatus overwrites user data stored in a hard disk drive with the reinstalled OS. To prevent this kind of troubles, at the time of reinstalling the OS, there needs a troublesome step of physically disconnecting devices other than a hard disk drive on which the OS is to be installed and then reinstalling the OS. This troublesome problem arises not only with hard disk drives but also with other kinds of storage devices. The problem also arises not only in reinstalling an OS but also in performing other processes using a hard disk drive of the information processing apparatus.

The present invention has been made in view of the foregoing, and is intended to provide an information processing apparatus, drive control program, and drive control method which prevent troubles occurring due to mismatch between physical and logical drives.

### Solution to Problem

To solve the above-described problem, there is provided a disclosed information processing apparatus, drive control program, and drive control method for associating logical drives with physical drives, and performing processing using the physical drives. In the disclosed information processing apparatus, a control unit assigns a target drive that is a physical drive to be used in processing, logical drive identification information identifying a logical drive corresponding to the target drive, and performs the processing using the target drive based on the logical drive identification information.

In addition, the disclosed drive control program causes a computer to function as a control unit that assigns a target drive that is a physical drive to be used in processing, logical drive identification information identifying a logical drive corresponding to the target drive, and performs the processing using the target drive based on the logical drive identification information.

In addition, according to the disclosed drive control method, a computer performs a procedure of assigning a target drive that is a physical drive to be used in processing, logical drive identification information identifying a logical drive corresponding to the target drive, and performing the processing using the target drive based on the logical drive identification information.

### Advantageous Effects of Invention

According to the disclosed information processing apparatus, drive control program, and drive control method, troubles due to mismatch between physical and logical drives are prevented by assigning a physical drive a matching logical drive.

The above and other objects, features, and advantages of the invention will become more apparent from the following detailed description taken in conjunction with the following drawings illustrating preferred embodiments of the present invention by way of example.

### Brief Description of Drawings

[FIG. 1] FIG. 1 illustrates a first embodiment.
[FIG. 2] FIG. 2 illustrates a hardware configuration of an information processing apparatus according to a second embodiment.
[FIG. 3] FIG. 3 is a block diagram illustrating a configuration of the information processing apparatus according to the second embodiment.
[FIG. 4] FIG. 4 illustrates an example data structure of a setting table according to the second embodiment.
[FIG. 5] FIG. 5 illustrates an example data structure of a drive status table according to the second embodiment.
[FIG. 6] FIG. 6 is a flowchart illustrating a recovery process according to the second embodiment.
[FIG. 7] FIG. 7 is the flowchart illustrating the recovery process according to the second embodiment.
[FIG. 8] FIG. 8 is a block diagram illustrating a configuration of an information processing apparatus according to a third embodiment.
[FIG. 9] FIG. 9 is a flowchart illustrating a recovery process according to the third embodiment.
[FIG. 10] FIG. 10 is a block diagram illustrating a configuration of an information processing apparatus according to a fourth embodiment.
[FIG. 11] FIG. 11 is a flowchart illustrating a recovery process according to the fourth embodiment.

### Description of Embodiments

Hereinafter, embodiments of the present invention will be explained with reference to the accompanying drawings.

### [First Embodiment]

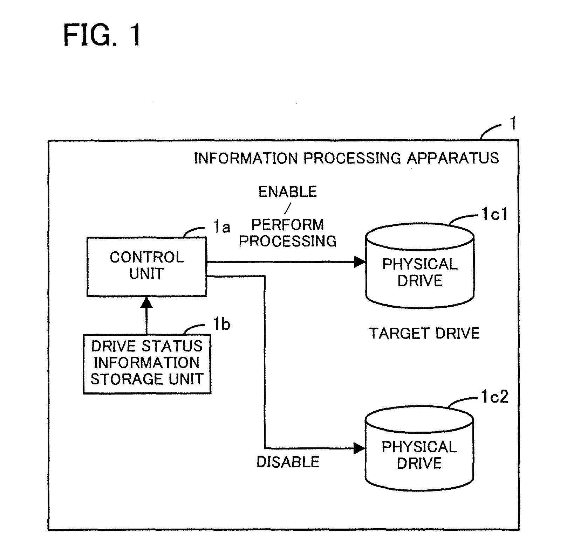

FIG. 1 illustrates a first embodiment. An information processing apparatus 1 illustrated in FIG. 1 associates logical drives with physical drives, and performs processing using the physical drives. The information processing apparatus 1 includes a control unit 1a, drive status information storage unit 1b, and physical drives 1c1 and 1c2. In this connection, the physical drives 1c1 and 1c2 may externally be connected to the information processing apparatus 1.

The control unit 1a assigns a target drive (for example, physical drive 1c1) logical drive identification information (for example, logical drive number) identifying a logical drive corresponding to the target drive. Then, the control unit 1a performs processing using the target drive based on this logical drive identification information.

More specifically, for example, the control unit 1a disables physical drives (for example, physical drive 1c2) other than the target drive, assigns the target drive the logical drive identification information identifying the logical drive corresponding to the target drive, and performs processing using the target drive based on the logical drive identification information. Then, after completion of the processing, the control unit 1a enables the physical drives which have been disabled from an enabled state, on the basis of drive status information stored in the drive status information storage unit 1b. Physical drives represent storage devices such as hard disk drives that the information processing apparatus 1 is able to use, expressed in physical units. On the other hand, logical drives represent storage devices such as hard disk drives that the information processing apparatus 1 is able to use, expressed in logical units.

The drive status information storage unit 1b stores drive status information indicating the state of each physical drive, an enabled or disabled state. The enabled state is a state where a physical drive is permitted to be used by the information processing apparatus 1 for reference, data write, data read, and other processes. The disabled state is a state where a physical drive is prohibited from being used by the information processing apparatus 1 for reference, data write, data read, and other processes.

The drive status information is stored to indicate previous states in which physical drives were before physical drives other than a target drive were disabled in order to perform processing. Then, after completion of the processing, physical drives which were in the enabled state before the processing was performed are enabled, and physical drives which were in the disabled state before the processing was performed are disabled, on the basis of the drive status information. In this way, each physical drive is reverted back to the same enabled or disabled state as before the processing was performed.

The physical drive 1c1 is a data-readable/writable storage device such as a hard disk drive. In this embodiment, the physical drive 1c1 is assumed to be a target drive that needs to be used in processing performed by the information processing apparatus 1. The processing performed by the information processing apparatus 1 is processing using a target drive, including, for example, OS recovery of the information processing apparatus 1 by reinstalling an OS on the target drive, data write on the target drive, and fault diagnosis of the target drive.

Similarly to the physical drive 1c1, the physical drive 1c2 is a data-readable/writable storage device such as a hard disk drive. In this embodiment, the physical drive 1c2 is assumed to be a physical drive that does not need to be used in processing performed by the information processing apparatus 1. In the case where the processing performed by the information processing apparatus 1 is reinstallation of an OS or data write, the physical drive 1c2 is treated as a physical drive that stores data such as user data that needs to be protected from being overwritten. In the case where the processing performed by the information processing apparatus 1 is fault diagnosis of a physical drive, on the other hand, the physical drive 1c2 is treated as a physical drive that is not to be subjected to the fault diagnosis.

In this connection, the physical drives 1c1 and 1c2 are not limited to hard disk drives, and any kinds of data-readable/writable storage devices may be used. A disk array device such as RAID (Redundant Arrays of Inexpensive Disks) may also be used. In addition, storage devices such as solid-state memory drives (Solid State Drives), other than hard disk drives, may be used.

By assigning a physical drive a matching logical drive as described above, troubles due to mismatch between the physical and logical drives are prevented.

### [Second Embodiment]

The second embodiment will now be described.

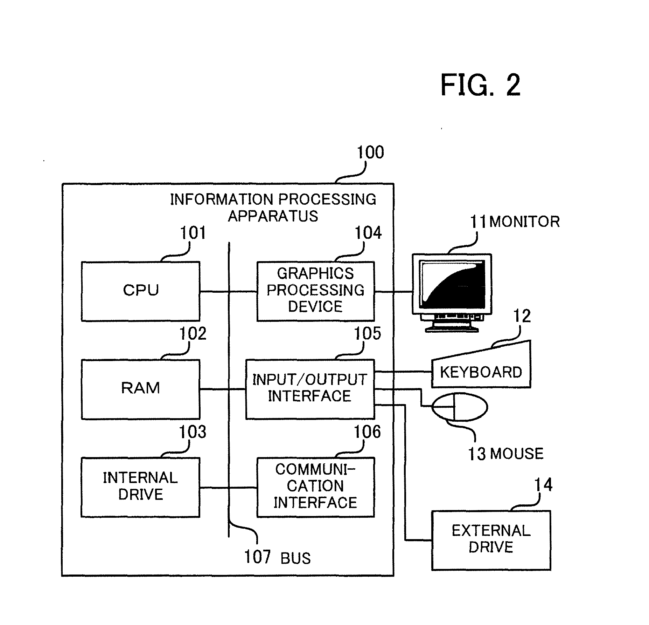

FIG. 2 illustrates a hardware configuration of an information processing apparatus according to the second embodiment. An information processing apparatus 100 illustrated in FIG. 2 is entirely controlled by a CPU (Central Processing Unit) 101. Connected to the CPU 101 via a bus 107 are a RAM (Random Access Memory) 102, an internal drive 103, graphics processing device 104, input/output interface 105, and communication interface 106.

The RAM 102 temporarily stores at least part of OS programs and application software programs (application programs) to be executed by the CPU 101. The RAM 102 also stores other data that is used while the CPU 101 performs processing. The internal drive 103 is a storage device such as a hard disk drive or an optical drive. The internal drive 103 stores the OS and application programs. The optical drive is a device which performs data write and read on a magneto-optical disc such as CD (Compact Disc) or DVD (Digital Versatile Disc).

A monitor 11 is connected to the graphics processing device 104. The graphics processing device 104 displays an image on the screen of the monitor 11 in accordance with instructions from the CPU 101.

A keyboard 12, mouse 13, and external drive 14 are connected to the input/output interface 105. The input/output interface 105 transfers signals from the keyboard 12 and mouse 13 to the CPU 101 via the bus 107, and performs data write and read on the external drive 14 via the bus 107 under the control of the CPU 101.

The communication interface 106 is connectable to a communication circuit such as the Internet (not illustrated), LAN (Local Area Network) (not illustrated), or cable television (not illustrated). The communication interface 106 is capable of performing data communications with an external apparatus such as another computer (not illustrated) or network drive (not illustrated) via the communication circuit. The communication interface 106 is also capable of acquiring video data of Internet television programs that are distributed via the communication circuit.

With the above hardware configuration, the processing functions of the embodiment are realized.

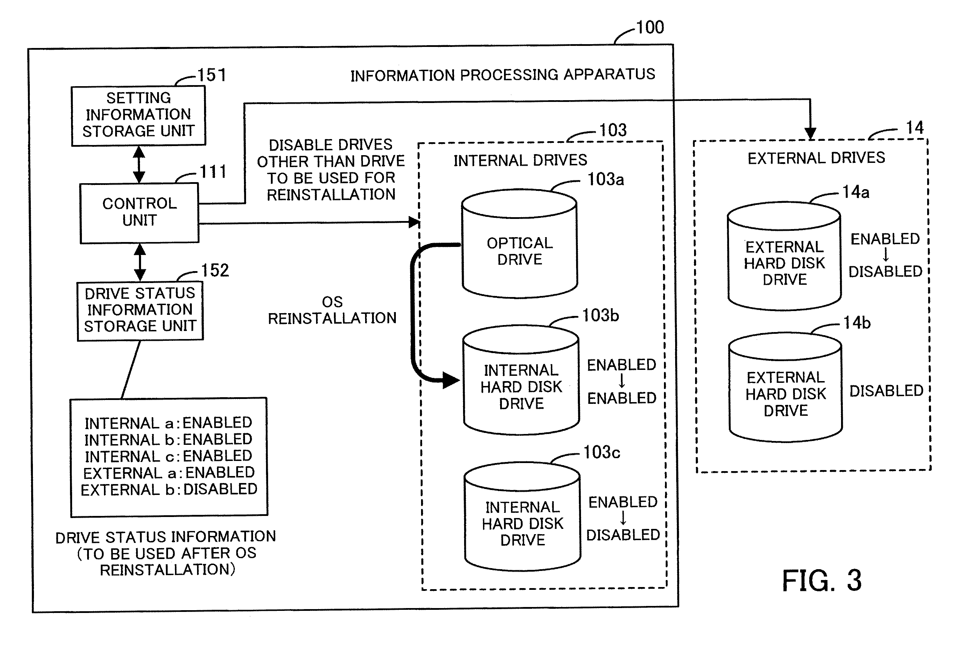

FIG. 3 is a block diagram illustrating a configuration of an information processing apparatus according to the second embodiment. The information processing apparatus 100 illustrated in FIG. 3 associates logical drives with physical drives, and performs processing using the physical drives. The information processing apparatus 100 includes internal drives 103, a control unit 111, a setting information storage unit 151, and a drive status information storage unit 152. Further, external drives 14 are connected to the information processing apparatus 100. Furthermore, the information processing apparatus 100 includes an optical drive 103a and internal hard disk drives 103b and 103c as the internal drives 103. In addition, as the external drives, external hard disk drives 14a and 14b are connected to the information processing apparatus 100.

The information processing apparatus 100 according to this embodiment is assumed to recover an OS on the internal hard disk drive 103b by using a recovery disk set in the optical drive 103a. The OS recovery is not limited this, and the OS may be recovered on the internal hard disk drive 103b from an external drive such as an external optical drive that is directly connected to the information processing apparatus 100 or a network drive provided on a network such as LAN connected to the information processing apparatus 100. In addition, the OS may be recovered on the external hard disk drive 14a or 14b or another drive.

The control unit 111 assigns logical drive identification information (for example, logical drive number) identifying a logical drive on which the OS recovery is to be performed, to a target drive (for example, internal hard disk drive 103b) that needs to be used for the OS recovery. Then, the control unit 111 performs the OS recovery process using the internal hard disk drive 103b based on this logical drive number. In this connection, physical drives represent storage devices such as hard disk drives that the information processing apparatus 100 is able to use, expressed in physical units. On the other hand, logical drives represent storage devices such as hard disk drives that the information processing apparatus 100 is able to use, expressed in logical units.

More specifically, the control unit 111 disables physical drives other than the internal hard disk drive 103b that is a target drive. Then, the control unit 111 assigns the internal hard disk drive 103b the logical drive number (for example, logical drive 0) of a logical drive on which the process is to be performed. Then, the control unit 111 performs the OS recovery process using the internal hard disk drive 103b based on the logical drive number. Then, after completion of the OS recovery process, the control unit 111 enables the physical drives which were disabled from an enabled state at the time of performing the process, on the basis of drive status information stored in the drive status information storage unit 152.

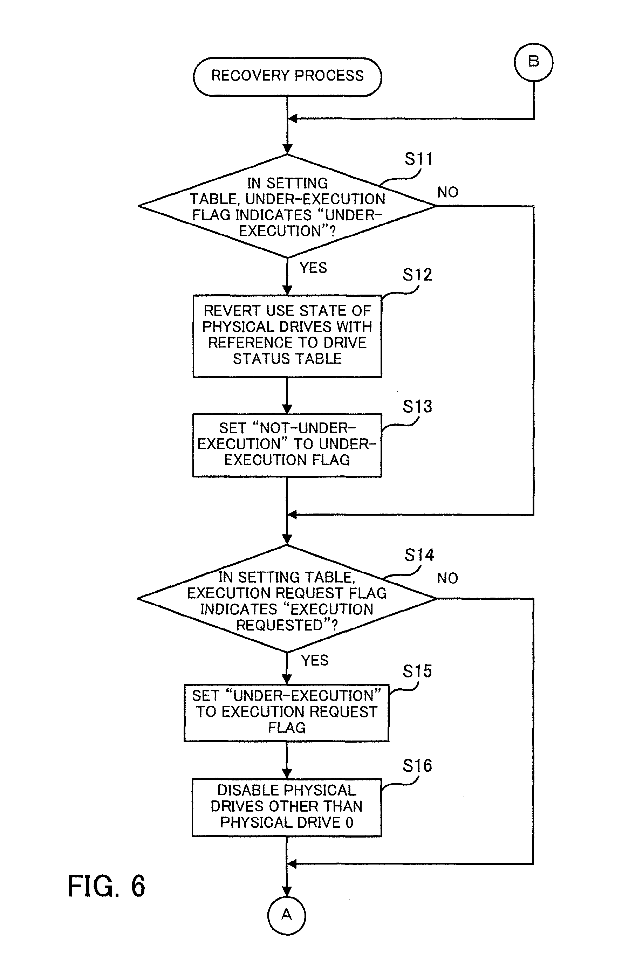

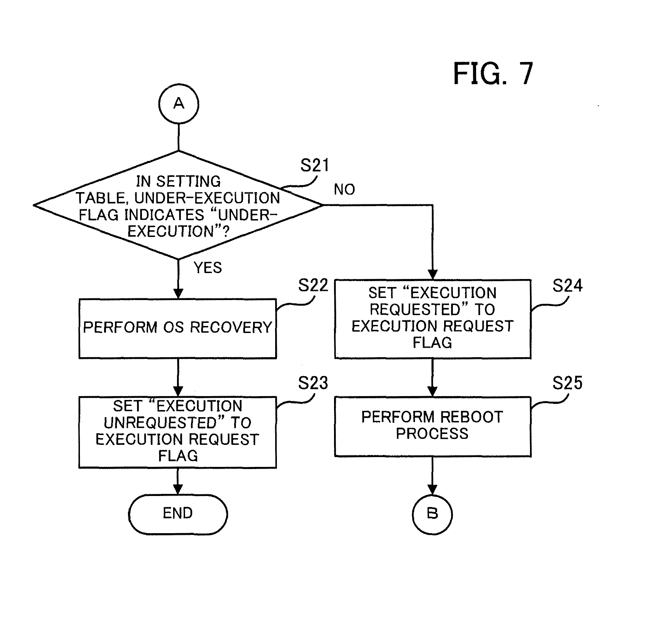

The setting information storage unit 151 stores setting information for controlling the recovery function according to this embodiment. On the basis of this setting information, the recovery process, which will be described later with reference to FIGS. 6 and 7, is controlled. This setting information storage unit 151 may be provided in a BIOS (Basic Input/Output System) chip of the information processing apparatus 100, or may be provided in the RAM 102 or internal drive 103.

The drive status information storage unit 152 stores drive status information indicating the state of each physical drive, an enabled or disabled state. The enabled state is a state where a physical drive is permitted to be used by the information processing apparatus 100 for reference, data write, data read, and other processes. On the other hand, the disabled state is a state where a physical drive is prohibited from being used by the information processing apparatus 100 for reference, data write, data read, and other processes. This drive status information storage unit 152 may be provided in the BIOS chip of the information processing apparatus 100, or may be provided in the RAM 102 or internal drive 103.

This drive status information is stored to indicate previous states in which physical drives were before physical drives other than a target drive were disabled in order to perform processing. Then, after completion of the processing, physical drives which were in the enabled state before the processing was performed are enabled, and physical drives which were in the disabled state before the processing was performed are disabled, on the basis of this drive status information. In this way, each physical drive is reverted back to the same enabled or disabled state as before the processing was performed.

The internal hard disk drive 103b is assumed to be a target drive that needs to be used in processing performed by the information processing apparatus 100. In the information processing apparatus 100 according to this embodiment, the internal hard disk drive 103b is assumed to be used for recovering an OS operating on the information processing apparatus 100. The processing performed by the information processing apparatus 100 is not limited to the OS recovery, and may be data write or fault diagnosis of a physical drive. In addition, another desired process using the internal hard disk drive 103b may be performed.

The internal hard disk drive 103c is assumed to be a physical drive that does not need to be used in the processing performed by the information processing apparatus 100. In the case where the processing performed by the information processing apparatus 100 is reinstallation of an OS or data write, the internal hard disk drive 103c is treated as a physical drive that stores data such as user data that needs to be protected from being overwritten. In the case where the processing performed by the information processing apparatus 100 is fault diagnosis of a physical drive, the internal hard disk drive 103b is treated as a physical drive that is not to be subjected to the fault diagnosis.

In this embodiment, at the time of recovering an OS on the information processing apparatus 100 including a plurality of hard disk drives, the process is performed on a target hard disk drive without the need of physically disconnecting the other hard disk drives, which does not need to be used in the process, and with preventing the target physical drive from being misrecognized.

In general, in a computer using a plurality of hard disk drives, OS recovery or another process is performed on the assumption that a physical drive 0 ("0" is a physical drive number) and a logical drive 0 ("0" is a logical drive number) are matched.

However, if misrecognition by a computer or another accident leads to an inappropriate assignment of a logical drive number to a physical drive, a trouble may occur. For example, consider the case where an OS is installed on a hard disk drive set as a physical drive 0, and user data is stored on a hard disk drive set as a physical drive 1. In addition, OS recovery is assumed to be performed on the physical drive 0, and a logical drive 0, which needs to be assigned to the physical drive 0, is assumed to be assigned to the physical drive 1.

In this case, to recover the OS on the physical drive 0, the computer system reinstalls the OS on the logical drive 0. However, since the logical drive 0 has been assigned to the physical drive 1 in error, the user data stored on the physical drive 1 is overwritten with the OS program data, which causes a fatal trouble, i.e., destruction of the user data. To avoid this kind of troubles, at the time of performing the OS recovery process, physical drives (for example, physical drive 1) which do not need to be used in the process need to be physically disconnected before the OS is reinstalled. Therefore, problems arise in terms of working performance and efficiency.

By contrast, according to the embodiment, at the time of recovering the OS of the information processing apparatus 100, an installation tool of the OS issues an inquiry as to the number of physically and validly connected hard disk drives (for example, three) to the BIOS of the information processing apparatus 100.

Then, the installation tool issues a disabling request to the BIOS so as to prohibit physical drives other than a physical drive (for example, physical drive 0) on which the OS needs to be reinstalled, out of the hard disk drives, from being accessed from the OS, and then reboots the information processing apparatus 100.

Then, at the time of the rebooting, the BIOS disables the physical drives other than the physical drive 0 in response to the request from the installation tool so as to prohibit the physical drives from being accessed from the OS.

Then, after the rebooting, the information processing apparatus 100 reinstalls the OS. At this time, in the information processing apparatus 100, the physical drives other than the physical drive 0, which are in the disabled state, are prohibited from being accessed from the installation tool. This prevents the trouble of installing the OS on a physical drive other than the physical drive 0.

Then, after completion of the OS reinstallation, the installation tool issues an enabling request to the BIOS so as to permit the physical drives (for example, three) which are prohibited by the BIOS from being accessed from the OS, to be accessed from the OS, and then reboots the information processing apparatus 100.

Then, at the time of rebooting the information processing apparatus 100, the BIOS enables the physical drives other than the physical drive 0 in response to the request from the installation tool so as to permit the physical drives to be accessed from the OS.

After the information processing apparatus 100 is rebooted, the newly installed OS starts on the physical drive 0 and the other physical drives other than the physical drive 0 become usable.

The above description is about OS recovery by way of example. The same may apply to the case of initially installing an OS, the case of installing or reinstalling software other than OS, the case of performing processing using a storage device, such as writing of data other than software, the case of changing the connection of a storage device, the case of performing initial setting or changing settings, and the case of recognizing and distinguishing a plurality of storage devices for repairing.

Further, in the embodiment, the information processing apparatus 100 includes the internal hard disk drives 103b and 103c, and the external hard disk drives 14a and 14b are connected. Alternatively, all of these hard disk drives may be provided internally or externally. In addition, these hard disk drives may be connected to the information processing apparatus 100 via other kinds of interfaces such as ATA (Advanced Technology Attachment), SCSI (Small Computer System Interface), USB (Universal Serial Bus), and IEEE 1394.

Still further, in this embodiment, the information processing apparatus 100 uses hard disk drives including the internal hard disk drives 103b and 103c and the external hard disk drives 14a and 14b. Alternatively, a disk array device such as RAID may be used. In addition, storage devices such as solid-state memory drives, other than hard disk drives, may also be used.

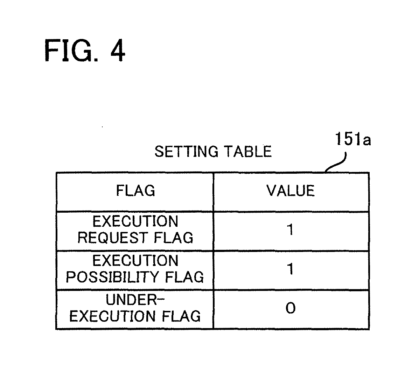

FIG. 4 illustrates an example data structure of a setting table according to the second embodiment. A setting table 151a illustrated in FIG. 4 is stored in the setting information storage unit 151 (described earlier with reference to FIG. 3) provided in the information processing apparatus 100, and is generated and managed by the BIOS of the information processing apparatus 100. The setting table 151a is a table for storing setting information indicating flags to be used for controlling the recovery function of the information processing apparatus 100.

The setting table 151a has columns for "flag" and "value". In this setting table 151a, data set in the columns arranged in a row is associated with each other.

A flag is a name that represents a flag included in the setting information. A value is the current value of the flag. In this embodiment, the recovery process, which will be described later, is controlled based on the values of the flags of the setting information.

For example, an execution request flag with a value of "1" indicates "execution requested" which means that there is currently a request for executing the recovery function. An execution request flag with a value of "0" indicates "execution unrequested" which means that there is currently no request for executing the recovery function. An execution possibility flag with a value of "1" indicates "execution possible" which means that the execution of the recovery function is possible. An execution possibility flag with a value of "0" indicates "execution impossible" which means that the execution of the recovery function is not possible. An under-execution flag with a value of "1" indicates "under-execution" which means that the recovery function is currently executed. An under-execution flag with a value of "0" indicates "not-under-execution" which means that the recovery function is not currently executed. These are just an example, and other values may be used to indicate the states of the flags used for executing the recovery function.

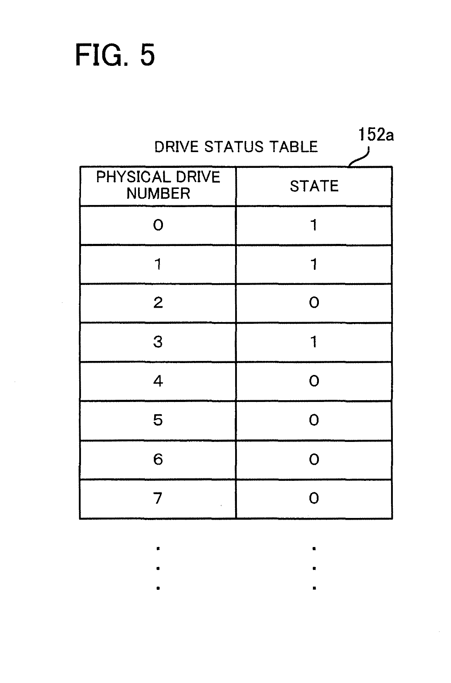

FIG. 5 illustrates an example data structure of a drive status table according to the second embodiment. A drive status table 152a illustrated in FIG. 5 is stored in the drive status information storage unit 152 (described earlier with reference to FIG. 3) provided in the BIOS chip of the information processing apparatus 100, and is generated and managed by the BIOS of the information processing apparatus 100. The drive status table 152a is a table for storing drive status information indicating the states of the external hard disk drives 14a and 14b and internal hard disk drives 103b and 103c, for the recovery function of the information processing apparatus 100.

The drive status table 152a has columns for "physical drive number" and "state". In this drive status table 152a, data in the columns arranged in a row is associated with each other to form drive status information.

Physical drive numbers are numbers identifying the external hard disk drives 14a and 14b and internal hard disk drives 103b and 103c which are hard disks accessible from the information processing apparatus 100 during OS recovery.

States indicate use states in which the external hard disk drives 14a and 14b and internal hard disk drives 103b and 103c are before the OS recovery. As the use state, an "enabled" state or "disabled" state is set for each physical drive, in which the "enabled" state indicates that the physical drive is usable, and the "disabled" state indicates that the physical drive is not usable.

In the recovery function according to this embodiment, hard disk drives other than a hard disk drive on which an OS is to be reinstalled for recovery are disabled. At this time, the information processing apparatus 100 stores the use state of each physical drive before the recovery as drive status information in the drive status information storage unit 152. Then, after completion of the recovery, the drive status information is read to acquire the state indicated by the drive status information. Then, the use state of each physical drive is set based on the acquired state. Thereby, each physical drive whose use state has been changed by the recovery function is reverted back to the same use state as before the recovery.

For example, a physical drive whose state is "1" is assumed to be in the enabled state, and a physical drive whose state is "0" is assumed to be in the disabled state. This setting is just an example, and other values may be used to indicate the use state of each physical drive. In addition, the drive status information according to this embodiment indicates the state of a hard disk drive. The drive status information is not limited to this and may indicate the state of an optical drive or another storage device.

FIGS. 6 and 7 are a flowchart illustrating a recovery process according to the second embodiment. The recovery process illustrated in FIGS. 6 and 7 is a process in which the information processing apparatus 100 recovers an OS by reinstalling the OS on a physical drive. This recovery process is performed, for example, in response to a user request for the OS recovery or automatically.

At step S11, the control unit 111 reads setting information from the setting table 151a stored in the setting information storage unit 151, and determines whether the value of the under-execution flag indicates under-execution. In the case where the value of the under-execution flag indicates under-execution, the process goes on to step S12. In the case where the value of the under-execution flag indicates not-under-execution, on the other hand, the process goes on to step S14.

At step S12, the control unit 111 reads drive status information from the drive status table 152a stored in the drive status information storage unit 152, and reverts the use states of the physical drives back to the same states as before the recovery function was executed, on the basis of the drive status information.

At step S13, the control unit 111 sets a value indicating not-under-execution to the under-execution flag of the setting information in the setting table 151a stored in the setting information storage unit 151.

At step S14, the control unit 111 reads the setting information from the setting table 151a stored in the setting information storage unit 151, and determines whether the value of the execution request flag indicates "execution requested". In the case where the value of the execution request flag indicates "execution requested", the process goes on to step S15. In the case where the value of the execution request flag indicates "execution unrequested", the process goes on to step S21 (FIG. 7).

At step S15, the control unit 111 sets a value indicating under-execution to the under-execution flag of the setting information in the setting table 151a stored in the setting information storage unit 151.

At step S16, the control unit 111 disables the physical drives other than the physical drive 0. Then, the process goes on to step S21. This prohibits the physical drives other than the physical drive 0, which have been disabled, from being accessed while the OS recovery is in progress. Therefore, the physical drives other than the physical drive 0 are prevented from being misrecognized as the physical drive 0, and the OS is prevented from being reinstalled on a physical drive other than the physical drive 0.

At step S21, the control unit 111 reads the setting information from the setting table 151a stored in the setting information storage unit 151, and determines whether the value of the under-execution flag indicates under-execution. In the case where the value of the under-execution flag indicates under-execution, the process goes on to step S22. In the case where the value of the under-execution flag indicates not-under-execution, on the other hand, the process goes on to step S24.

At step S22, the control unit 111 recovers (reinstalls) the OS on the logical drive 0. At this time, since the logical drive 0 has been assigned to the physical drive 0, the OS is recovered properly.

At step S23, the control unit 111 sets a value indicating "execution unrequested" to the execution request flag of the setting information in the setting table 151a stored in the setting information storage unit 151. Then, this process is completed.

At step S24, the control unit 111 sets the "execution requested" to the execution request flag of the setting information in the setting table 151a stored in the setting table storage unit 151.

At step S25, the control unit 111 performs a process of rebooting the information processing apparatus 100. After the information processing apparatus 100 is rebooted, the process goes on to step S11 (FIG. 6).

As described above, according to the second embodiment, a hard disk drive that needs to be used for the OS recovery is assigned a matching logical drive number, so as to prevent troubles such as data destruction due to mismatch between the physical and logical drives.

That is, the OS is recovered after the hard disk drives other than the hard disk drive that needs to be used for the OS recovery are disabled, so as to write OS program data and other data on the target hard disk drive properly. As a result, data destruction and other troubles due to misrecognition of logical drives by the system of the information processing apparatus 100 are prevented.

Further, the drive status information indicates the state of each hard disk drive in which the hard disk drive is before the OS is recovered, so that, after the OS is recovered, the state of the hard disk drive is reverted back to the same state as before the OS recovery.

Still further, the state of each hard disk drive is set in the drive status information before the OS recovery process is performed, so that, after the OS recovery process is performed, the state of each hard disk drive is reverted back to the same state as before the OS recovery.

### [Third Embodiment]

The following describes a third embodiment. The description focuses on different features from the above-described second embodiment, and the same features are given the same reference numbers and will not be described.

The third embodiment has a different feature from the second embodiment in that the third embodiment judges whether a logical drive number to which the OS is to be reinstalled is assigned to a physical drive on which the OS needs to be reinstalled, before an OS recovery process is performed. In the case where the assignment is inappropriate, assignment and judgment are repeated, and when the appropriate assignment is made, the OS is recovered.

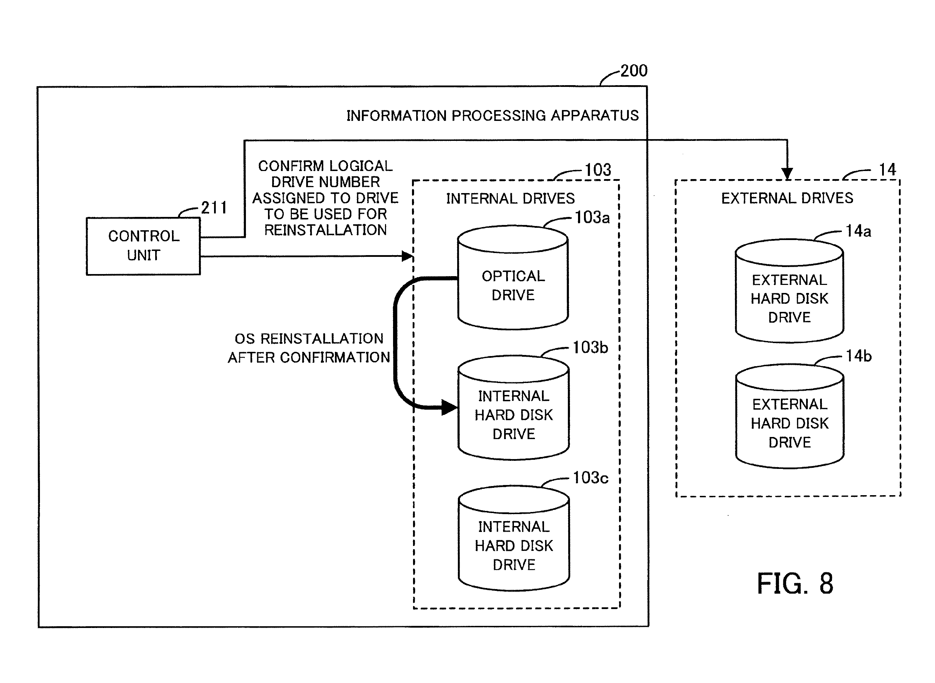

FIG. 8 is a block diagram illustrating a configuration of an information processing apparatus according to the third embodiment. An information processing apparatus 200 illustrated in FIG. 8 associates logical drives with physical drives, and performs processing using the physical drives. The information processing apparatus 200 includes internal drives 103 and a control unit 211. In addition, external drives 14 are connected to the information processing apparatus 200. The information processing apparatus 200 also includes an optical drive 103a and internal hard disk drives 103b and 103c as the internal drives 103. As the external drives, external hard disk drives 14a and 14b are connected to the information processing apparatus 200.

The information processing apparatus 200 according to this embodiment is assumed to recover an OS on the internal hard disk drive 103b by using a recovery disk set in the optical drive 103a. The OS recovery may not be limited to this, and the OS may be recovered on the internal hard disk drive 103b from an external drive such as an external optical drive that is directly connected to the information processing apparatus 200 or a network drive provided on a network such as LAN to which the information processing apparatus 200 is connected. In addition, the OS may be recovered on the external hard disk drive 14a or 14b, or another drive.

The control unit 211 assigns logical drive identification information (for example, logical drive number) identifying a logical drive on which the OS recovery is to be performed, to a target drive (for example, internal hard disk drive 103b) that needs to be used for the OS recovery. Then, the control unit 211 performs the OS recovery process using the internal hard disk drive 103b based on the logical drive number. Physical drives represent storage devices such as hard disk drives that the information processing apparatus 200 is able to use, expressed in physical units. On the other hand, logical drives represent storage devices such as hard disk drives that the information processing apparatus 200 is able to use, expressed in logical units.

More specifically, the control unit 211 assigns logical drive numbers to respective physical drives including the internal hard disk drives 103b and 103c and external hard disk drives 14a and 14b. Then, the control unit 211 judges whether a logical drive number (for example, logical drive 0) that needs to be assigned to a target drive has been assigned to the internal hard disk drive 103b that needs to be used for the OS recovery process. Then, in the case where an appropriate logical drive number has been assigned to the internal hard disk drive 103b, the control unit 211 performs the OS recovery process using the internal hard disk drive 103b based on the logical drive number.

The internal hard disk drive 103b is assumed to be a target drive that needs to be used in processing performed by the information processing apparatus 200. In the information processing apparatus 200 according to this embodiment, the internal hard disk drive 103b is assumed to be used for recovering an OS operating on the information processing apparatus 200. The processing performed by the information processing apparatus 200 is not limited to the OS recovery, and may be data write or fault diagnosis of a physical drive. In addition, another desired process may be performed using the internal hard disk drive 103b.

In this embodiment, the internal hard disk drive 103c is assumed to be a physical drive that does not need to be used in processing performed by the information processing apparatus 200. In the case where the processing performed by the information processing apparatus 200 is reinstallation of an OS or data write, the internal hard disk drive 103c is taken as a physical drive that stores user data or other data that needs to be protected from being overwritten. In addition, in the case where the processing performed by the information processing apparatus 200 is fault diagnosis of a physical drive, the internal hard disk drive 103b is taken as a physical drive that is not to be subjected to the fault diagnosis.

In this embodiment, the information processing apparatus 200 includes the internal hard disk drives 103b and 103c, and the external hard disk drives 14a and 14b are connected. Alternatively, all of these hard disk drives may be provided internally or externally. In addition, these hard disk drives may be connected to the information processing apparatus 200 via other kinds of interfaces such as ATA, SCSI, USB, and IEEE 1394.

In addition, in this embodiment, the information processing apparatus 200 uses hard disk drives including the internal hard disk drives 103b and 103c and external hard disk drives 14a and 14b. Alternatively, a disk array device such as RAID may be used. In addition, storage devices such as solid-state memory drives, other than the hard disk drives, may also be used.

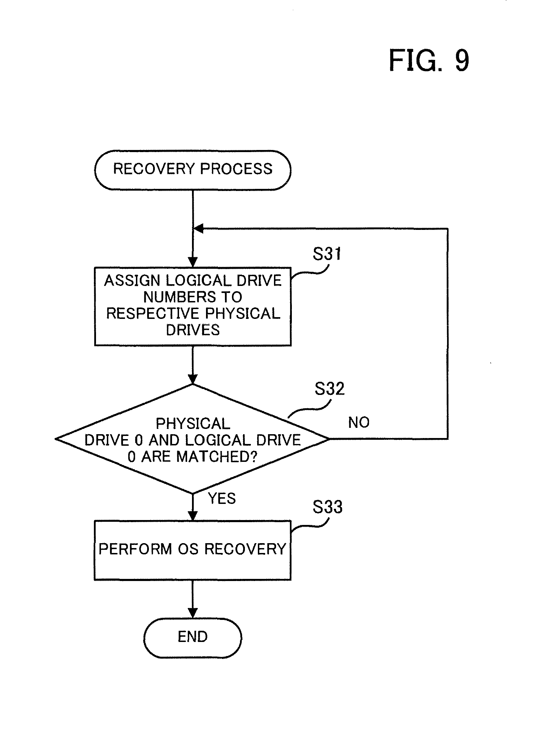

FIG. 9 is a flowchart illustrating a recovery process according to the third embodiment. The recovery process illustrated in FIG. 9 is a process for recovering an OS by reinstalling the OS on a physical drive after the information processing apparatus 200 judges whether assignment is appropriate or not and obtains a judgment result indicating that the assignment is appropriate. The recovery process is performed, for example, in response to a user request for the OS recovery or automatically.

At step S31, the control unit 211 assigns logical drive numbers to respective physical drives including the internal hard disk drives 103b and 103c and external hard disk drives 14a and 14b which the information processing apparatus 200 is able to use.

At step S32, the control unit 211 checks the assignment to the physical drives made at step S31 to judge whether the physical drive 0 on which the OS needs to be reinstalled and the logical drive 0 on which the OS is to be reinstalled are matched (assignment to a matching hard disk drive). In the case where the physical drive 0 and the logical drive 0 are matched, the process goes on to step S33. In the case where the physical drive 0 and the logical drive 0 are not matched, the process goes on to step S31.

At step S33, the control unit 211 recovers (reinstalls) the OS on the logical drive 0. Since the logical drive 0 has been assigned to the physical drive 0, the OS is recovered properly.

As described above, according to the third embodiment, a hard disk drive that needs to be used for the OS recovery is assigned a matching logical drive number, so as to prevent troubles such as data destruction due to mismatch between the physical and logical drives.

That is, after confirming whether an appropriate logical drive number has been assigned to a hard disk drive that needs to be used for the process, the OS recovery process is performed. Therefore, OS program data and other data is written on the target hard disk drive properly. This means that troubles such as data destruction due to misrecognition of a logical drive by the system of the information processing apparatus 200 are prevented.

### [Fourth Embodiment]

The following describes a fourth embodiment. The description focuses on different features from the above-described third embodiment, and the same features are given the same reference numbers and will not be described again.

The fourth embodiment has a different feature from the third embodiment in that the fourth embodiment judges whether an appropriate logical drive number to which the OS is to be reinstalled has been assigned to a physical drive on which an OS needs to be reinstalled before an OS recovery process is performed. Then, in the case where the assignment is not appropriate, the assignment and judgment are repeated a predetermined number of times, and then when the appropriate assignment is made, the OS is recovered. In the case where the assignment is still inappropriate even after the assignment and judgment are repeated the predetermined number of times, physical drives other than the physical drive on which the OS needs to be reinstalled are disabled and then the assignment is performed again, and then the OS is reinstalled based on the result of the assignment.

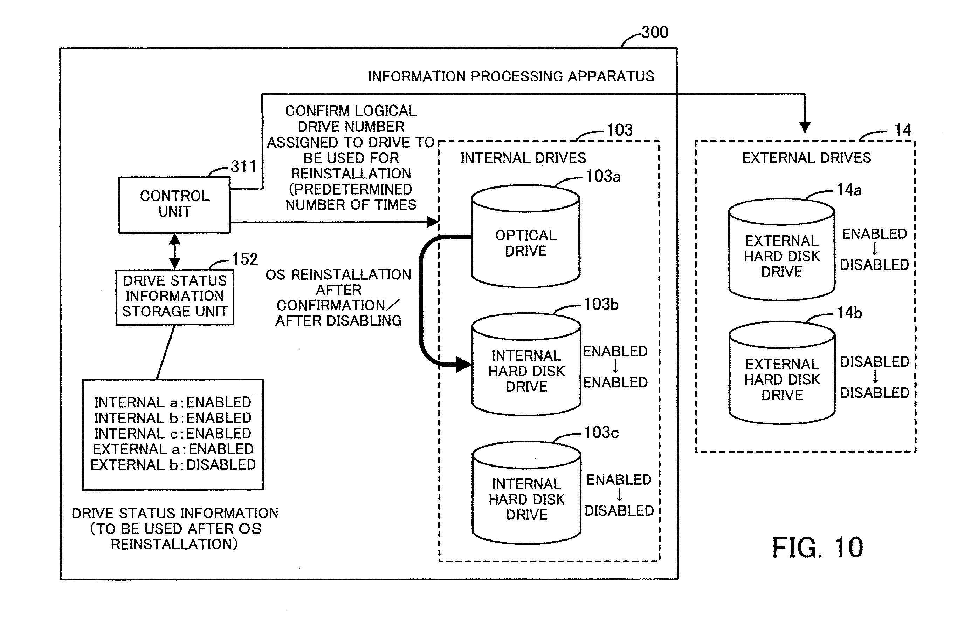

FIG. 10 is a block diagram illustrating a configuration of an information processing apparatus according to the fourth embodiment. An information processing apparatus 300 illustrated in FIG. 10 associates logical drives with physical drives, and performs processing using the physical drives. The information processing apparatus 300 includes internal drives 103 and a control unit 311. In addition, external drives 14 are connected to the information processing apparatus 300. The information processing apparatus 300 includes an optical drive 103a and internal hard disk drives 103b and 103c as the internal drives 103. In addition, as the external drives, external hard disk drives 14a and 14b are connected to the information processing apparatus 300.

The information processing apparatus 300 according to this embodiment is assumed to recover an OS on the internal hard disk drive 103b by using a recovery disk set in the optical drive 103a. The OS recovery is not limited to this, and the OS may be recovered on the internal hard disk drive 103b from an external drive such as an external optical drive that is directly connected to the information processing apparatus 300 or a network drive provided on a network such as LAN connected to the information processing apparatus 300. Further, the OS may be recovered on the external hard disk drive 14a or 14b, or another drive.

The control unit 311 assigns logical drive identification information (for example, logical drive number) identifying a logical drive on which the OS recovery is to be performed, to a target drive (for example, internal hard disk drive 103b) that needs to be used for the OS recovery. Then, the control unit 311 performs an OS recovery process using the internal hard disk drive 103b based on this logical drive number. Physical drives represent storage devices such as hard disk drives that the information processing apparatus 300 is able to use, expressed in physical units. On the other hand, logical drives represent storage devices such as hard disk drives that the information processing apparatus 300 is able to use, expressed in logical units.

More specifically, the control unit 311 assigns logical drive numbers to respective physical drives including the internal hard disk drives 103b and 103c and external hard disk drives 14a and 14b. Then, the control unit 311 judges whether a logical drive number (for example, logical drive 0) that needs to be assigned to a target drive has been assigned to the internal hard disk drive 103b that needs to be used for the OS recovery process. In the case where the appropriate logical drive number has been assigned to the internal hard disk drive 103b, the control unit 311 performs the OS recovery process using the internal hard disk drive 103b based on the logical drive number.

In the case where an appropriate logical drive number has not been assigned to the internal hard disk drive 103b, on the contrary, the control unit 311 repeats the assignment and judgment a predetermined number of times until the appropriate logical drive number is assigned to the internal hard disk drive 103b.

In the case where an appropriate logical drive number is not assigned to the internal hard disk drive 103b even after the assignment and judgment are repeated the predetermined number of times, the control unit 311 disables the physical drives other than the internal hard disk drive 103b that is a target drive. Then, the control unit 311 assigns the internal hard disk drive 103b the logical drive number (for example, logical drive 0) of the logical drive on which the process is to be performed. Then, the control unit 311 performs the OS recovery process using the internal hard disk drive 103b based on the logical drive number. Then, after completion of the OS recovery process, the control unit 311 enables the physical drives which were disabled from the enabled state at the time of performing the process, on the basis of drive status information stored in a drive status information storage unit 152.

In addition, the control unit 311 sets the state of each physical drive, an enabled or disabled state, in the drive status information stored in the drive status information storage unit 152. Thereby, after completion of the OS recovery, the state of each physical drive is reverted back to the same state as before the OS recovery.

The drive status information storage unit 152 stores drive status information indicating the state of each physical drive, an enabled or disabled state. The enabled state is a state where a physical drive is permitted to be used by the information processing apparatus 300 for reference, data write, data read, and other processes. The disabled state is a state where a physical drive is prohibited from being used by the information processing apparatus 300 for reference, data write, data read, and other processes. This drive status information storage unit 152 may be provided in the BIOS chip of the information processing apparatus 300 or may be provided in the RAM 102 or internal drive 103.

This drive status information is stored to indicate previous states in which physical drives were before physical drives other than a target drive were disabled in order to perform processing. Then, after completion of the processing, physical drives which were in the enabled state before the processing was performed are enabled, and physical drives which were in the disabled state before the processing was performed are disabled. In this way, the state of each physical drive is reverted back to the same state as before the processing was performed.

The internal hard disk drive 103b is assumed to be a target drive that needs to be used in processing performed by the information processing apparatus 300. In the information processing apparatus 300 according to this embodiment, the internal hard disk drive 103b is assumed to be used for recovering an OS operating on the information processing apparatus 300. The processing performed by the information processing apparatus 300 is not limited to the OS recovery, and may be data write or fault diagnosis of a physical drive. In addition, another desired process may be performed using the internal hard disk drive 103b.

The internal hard disk drive 103c is assumed to be a physical drive that does not need to be used in the processing performed by the information processing apparatus 300. In the case where the processing performed by the information processing apparatus 300 is reinstallation of an OS or data write, the internal hard disk drive 103c is taken as a physical drive that stores user data or other data that needs to be protected from being overwritten. In addition, in the case where the processing performed by the information processing apparatus 300 is fault diagnosis of a physical drive, the internal hard disk drive 103b is taken as a physical drive that is not to be subjected to the fault diagnosis.

According to this embodiment, the information processing apparatus 300 includes the internal hard disk drives 103b and 103c, and the external hard disk drives 14a and 14b are connected. Alternatively, all of these hard disk drives may be provided internally or externally. In addition, these hard disk drives may be connected to the information processing apparatus 300 via other kinds of interfaces such as ATA, SCSI, USB, and IEEE 1394.

In addition, according to this embodiment, the information processing apparatus 300 uses hard disk drives including the internal hard disk drives 103b and 103c and external hard disk drives 14a and 14b. Alternatively, a disk array device such as RAID may be used. In addition, storage devices such as solid-state memory drives, other than hard disk drives, may also be used.

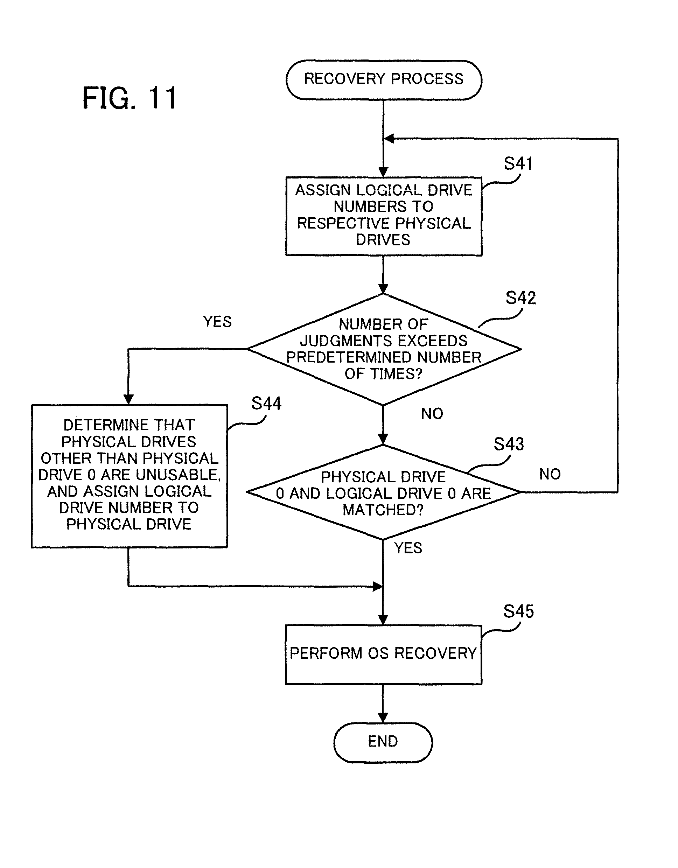

FIG. 11 is a flowchart illustrating a recovery process according to the fourth embodiment. The recovery process illustrated in FIG. 11 is a process in which the information processing apparatus 300 recovers an OS by judging a predetermined number of times whether assignment is appropriate, and reinstalling the OS depending on the result of the judgment. The recovery process is performed, for example, in response to a user request for the OS recovery or automatically.

At step S41, the control unit 311 assigns logical drive numbers to respective physical drives including the internal hard disk drives 103b and 103c and external hard disk drives 14a and 14b which the information processing apparatus 200 is able to use.

At step S42, the control unit 311 determines the number of judgments made at step S41 exceeds a predetermined number of times (10 times). In the case where the number of judgments exceeds the predetermined number of times, the process goes on to step S44. In the case where the number of judgments does not exceed the predetermined number of times, the process goes on to step S43.

At step S43, the control unit 311 judges whether the assignment to physical drives made at step S41 results that the physical drive 0 on which the OS needs to be reinstalled and the logical drive 0 on which the OS is to be reinstalled are matched (assignment to a matching hard disk drive). In the case where the physical drive 0 and logical drive 0 are matched, the process goes on to step S45. In the case where the physical drive 0 and logical drive 0 are not matched, the process goes on to step S41.

At step S44, the control unit 311 determines that the physical drives other than the physical drive 0 are not usable, and assigns the logical drive 0 only to the physical drive 0. Thereby, the physical drives other than the physical drive 0 are prohibited from being accessed while the OS recovery is in progress. As a result, the misrecognition of the physical drives other than the physical drive 0 as the logical drive 0 and reinstallation of the OS on a physical drive other than the physical drive 0 are prevented.

At step S45, the control unit 311 recovers (reinstalls) the OS on the logical drive 0. At this time, since the logical drive 0 has been assigned to the physical drive 0, the OS is recovered properly.

As described above, according to the fourth embodiment, a hard disk drive that needs to be used for the OS recovery is assigned a matching logical drive number, so as to prevent troubles such as data destruction due to mismatch between the physical and logical drives.

That is, before the OS recovery process is performed, the hard disk drive that needs to be used for the process is checked to judge whether an appropriate logical drive number has been assigned to the hard disk drive. Therefore, OS program data and other data are written on the target hard disk drive properly. Therefore, data destruction and other troubles due to misrecognition of a logical drive by the system of the information processing apparatus 300 are prevented.

In addition, in the case where an appropriate logical drive number is not assigned to a hard disk drive that needs to be used for the process even after the judgment is made a predetermined number of times, the hard disk drives other than the target drive that needs to be used for the OS recovery are disabled, and then the OS is recovered. As a result, OS program data and other data are written on the target hard disk drive properly.

In addition, the drive status information indicates the state of each hard disk drive in which the hard disk drive is before the OS is recovered. Therefore, after completion of the OS recovery process, the state of each hard disk drive is reverted back to the same state as before the process.

Further, before the OS recovery process is performed, the state of each hard disk drive is set in the drive status information. Therefore, after the OS recovery process is performed, the state of each hard disk drive is reverted back to the same state as before the OS recovery process.

The above processing functions can be realized by using a computer. In this case, a program is prepared, which describes processes for the functions of the information processing apparatus 100, 200, 300. A computer realizes the above processing functions by executing the program.

The program describing the intended processes may be recorded on a computer-readable recording medium. Computer-readable recording media include magnetic recording devices, optical discs, magneto-optical recording media, semiconductor memories, etc. The magnetic recording devices include HDD, Flexible Disks (FD), Magnetic Tapes (MT), etc. The optical discs include DVDs, DVD-RAMs, CD-ROMs (Read Only Memory), CD-R (Recordable)/RW (ReWritable), etc. The magneto-optical recording media include MOs (Magneto-Optical disk), etc.

To distribute the program, portable recording media, such as DVDs and CD-ROMs, on which the program is recorded, may be put on sale. Alternatively, the program may be stored in the storage device of a server computer and may be transferred from the server computer to other computers through a network.

A computer which is to execute the above program stores in its local storage device the program recorded on a portable recording medium or transferred from the server computer, for example. Then, the computer reads the program from the local storage device, and runs the program. The computer may run the program directly from the portable recording medium. Also, while receiving the program being transferred from the server computer, the computer may sequentially run this program.

The disclosed information processing apparatus, drive control program, and drive control method are hereinbefore described based on the illustrated embodiments. The foregoing is considered as illustrative only of the principles of the present invention. Numerous modifications and changes will readily occur to those skilled in the art, it is not desired to limit the invention to the exact construction and applications shown and described, and each element may be replaced by any other element having equivalent functions. Further, any other configuration or step may be added thereto. Still further, two or more configurations in the embodiments may be combined to provide the disclosed techniques. Still further, all suitable modifications and equivalents may be regarded as falling within the scope of the invention in the appended claims and their equivalents.

### Reference Signs List

- 1: Information processing apparatus
- 1a: Control unit
- 1b: Drive status information storage unit
- 1c1, 1c2: Physical drive

## Claims

1. An information processing apparatus for associating a logical drive with a physical drive and performing processing using the physical drive, the information processing apparatus comprising:
a control unit configured to assign a target drive logical drive identification information identifying the logical drive corresponding to the target drive, and perform the processing using the target drive based on the logical drive identification information, the target drive being the physical drive to be used in the processing.

2. The information processing apparatus according to claim 1, wherein the control unit disables physical drives other than the target drive, assigns the target drive the logical drive identification information identifying the logical drive corresponding to the target drive, performs the processing using the target drive based on the logical drive identification information, and after completion of the processing, enables the physical drives which were disabled from an enabled state.

3. The information processing apparatus according to claim 2, further comprises a drive status information storage unit configured to store drive status information indicating whether the physical drives are in enabled or disabled state,
wherein the control unit enables the physical drives which were disabled from the enabled state, on the basis of the drive status information stored in the drive status information storage unit after completion of the processing.

4. The information processing apparatus according to claim 3, wherein the control unit sets information indicating whether the physical drives are in the enabled or disabled state, in the drive status information stored in the drive status information storage unit.

5. The information processing apparatus according to claim 1, wherein the processing is OS recovery.

6. The information processing apparatus according to claim 1, wherein the processing is data write.

7. The information processing apparatus according to claim 1, wherein the processing is fault diagnosis of the physical drive.

8. The information processing apparatus according to claim 1, wherein the control unit assigns each physical drive the logical drive identification information, judges whether the assigning has assigned the target drive the logical drive identification information that needs to be assigned to the target drive, and in a case where the target drive has been assigned the logical drive identification information that needs to be assigned to the target drive, performs the processing using the target drive based on the logical drive identification information.

9. The information processing apparatus according to claim 8, wherein the control unit judges, after the assigning, whether the assigning has assigned the target drive the logical drive identification information that needs to be assigned to the target drive, and performs the processing using the target drive in the case where the target drive has been assigned the logical drive identification information that needs to be assigned to the target drive, or in a case where the target drive has not been assigned the logical drive identification information that needs to be assigned to the target drive, repeats the assigning and the judging a predetermined number of times until the target drive is assigned the logical drive identification information that needs to be assigned to the target drive, and in a case where the target drive is not assigned the logical drive identification information that needs to be assigned to the target drive even after the assigning and the judging are repeated the predetermined number of times, disables the physical drives other than the target drive, assigns the target drive the logical drive identification information identifying the logical drive corresponding to the target drive, and performs the processing using the target drive based on the logical drive identification information.

10. A drive control program for associating a logical drive with a physical drive and performing processing using the physical drive, the drive control program causing a computer to function as:
a control unit that assigns a target drive logical drive identification information identifying the logical drive corresponding to the target drive, and performs the processing using the target drive based on the logical drive identification information, the target drive being the physical drive to be used in the processing.

11. A drive control method executed by a computer for associating a logical drive with a physical drive and performing processing using the physical drive, the drive control method comprising:
assigning a target drive logical drive identification information identifying the logical drive corresponding to the target drive, the target drive being the physical drive to be used in the processing; and
performing the processing using the target drive based on the logical drive identification information.
